# EUROPEAN PATENT APPLICATION

(11) **EP 4 475 297 A1**
(43) Date of publication of application: **11.12.2024**
(21) Application number: 23747040.6
(22) Date of filing: 26.01.2023
(51) Int. Cl.: H01M 50/164, H01G 11/80, H01M 50/107, H01M 50/152, H01M 50/159, H01M 50/167

(54) **POWER STORAGE DEVICE**

(30) Priority: 31.01.2022 JP 2022013211
(71) Applicant: Panasonic Intellectual Property Management Co., Ltd., Kadoma-shi, Osaka 571-0057 (JP)
(72) Inventor: NAGAO, Takeshi, Kadoma-shi, Osaka 571-0057 (JP)
(74) Representative: Eisenführ Speiser
(86) International application number: PCT/JP2023/002464
(87) International publication number: WO 2023/145830

(57) **Abstract**

A power storage device (battery) includes: an outer covering can in a bottomed cylindrical shape, the outer covering can accommodating an electrode body; and a sealing member that closes an opening of the outer covering can. The sealing member includes a sealing plate and a reinforcing plate that is disposed on an outer peripheral side of the sealing plate, the reinforcing plate being joined with the sealing plate at a boundary extending in a thickness direction of the sealing plate, and the reinforcing plate is made of a member having a rigidity higher than rigidity of the sealing plate.

## Description

### TECHNICAL FIELD

The present disclosure relates to a power storage device.

### BACKGROUND ART

A power storage device is required to have a high capacity. As a measure for increasing the capacity, it is effective to reduce a thickness of the sealing member to increase a volume in the battery can. The sealing member in the battery has a current interrupt device (CID) function for sealing the battery case and interrupting a current when an internal gas is generated at the time of overcharge or abnormality. PTL 1 describes a power storage device (battery) having the CID function for disconnecting as a sealing plate is separated from a lead in accordance with an increase in internal pressure in the battery. PTL 2 describes a battery sealing body in which two kinds of metals are overlapped to increase strength.

### Citation List

### Patent Literature

PTL 1: Unexamined Japanese Patent Publication No. 2021-125304
PTL 2: International Publication No. WO 2017/073027

### SUMMARY OF THE INVENTION

In the power storage device, when the sealing member is thinned, rigidity is lowered and the sealing member can be easily deformed. This causes deterioration in sealing performance and malfunction of the CID. Since the sealing member described in PTL 2 has a structure in which two kinds of metals are overlapped to increase rigidity, it is difficult to reduce the thickness.

An object of the present disclosure is to provide a power storage device with which rigidity is increased and deformation is suppressed even when a sealing part is thinned.

A power storage device according to the present disclosure includes: an outer covering can in a bottomed cylindrical shape, the outer covering can accommodating an electrode body; and a sealing member that closes an opening of the outer covering can. The sealing member includes a sealing plate and a reinforcing plate that is disposed on an outer peripheral side of the sealing plate, the reinforcing plate being joined with the sealing plate at a boundary extending in a thickness direction of the sealing plate, and the reinforcing plate is made of a member having a rigidity higher than rigidity of the sealing plate.

With the power storage device according to the present disclosure, rigidity is increased and deformation of the sealing member is suppressed even when a sealing part is thinned.

### BRIEF DESCRIPTION OF THE DRAWINGS

Fig. 1 is a sectional view of a battery according to an exemplary embodiment.
Fig. 2 is a partially enlarged sectional view of a sealing member according to the exemplary embodiment.
Fig. 3 is a partially enlarged sectional view of the sealing member according to another exemplary embodiment.
Fig. 4 is a partially enlarged sectional view of the sealing member according to still another exemplary embodiment.
Fig. 5 is a partially enlarged sectional view of the sealing member according to still another exemplary embodiment.
Fig. 6 is a partially enlarged sectional view of the sealing member according to still another exemplary embodiment.

### DESCRIPTION OF EMBODIMENTS

Exemplary embodiments of the present disclosure are described in detail below with reference to the drawings. In the following description, specific shapes, materials, directions, numerical values, etc. are examples shown to facilitate understanding of the present disclosure and may be changed as appropriate to suit uses, purposes, specifications, or other requirements. In addition, it is initially envisaged that the configuration elements of the exemplary embodiments and modified examples thereof described hereinafter are selectively combined.

### <First exemplary embodiment>

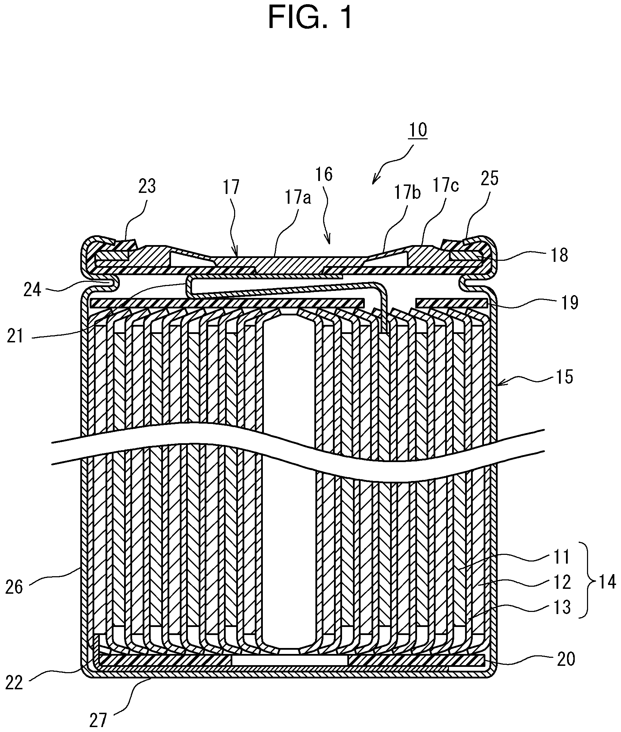

Fig. 1 is a sectional view of battery 10 according to an exemplary embodiment of a power storage device of the present disclosure. Hereinafter, a configuration of a lithium-ion secondary battery will be described as an example of the power storage device of the present disclosure. However, the power storage device of the present disclosure is not limited to the lithium-ion secondary battery. The power storage device of the present disclosure may be another secondary battery such as a nickel-metal-hydride battery, or a capacitor such as an electric double-layer capacitor or a lithium-ion capacitor. As shown in Fig. 1, battery 10 includes bottomed cylindrical outer covering can 15, sealing member 16 that closes an opening of outer covering can 15, and gasket 23 interposed between outer covering can 15 and sealing member 16. Battery 10 includes electrode body 14 and an electrolyte that are housed in outer covering can 15. Electrode body 14 includes positive electrode 11, negative electrode 12, and separator 13, and has a structure in which positive electrode 11 and negative electrode 12 are spirally wound with separator 13 interposed therebetween.

The non-aqueous electrolyte contains a non-aqueous solvent and an electrolyte salt dissolved in the non-aqueous solvent. Examples of the non-aqueous solvent to be used include esters, ethers, nitriles, amides, and mixed solvents of two or more of the above. The non-aqueous solvent may contain a halogen substitution obtained by substituting at least a part of hydrogen as a solvent with a halogen atom such as fluorine. The non-aqueous electrolyte is not limited to a liquid electrolyte, and may be a solid electrolyte using a gel polymer or the like. As the electrolyte salt, a lithium salt such as LiPF6 is used.

Electrode body 14 includes elongated positive electrode 11, elongated negative electrode 12, and two elongated separators 13. Electrode body 14 further includes positive electrode lead 21 joined to positive electrode 11 and negative electrode lead 22 joined to negative electrode 12. Negative electrode 12 is provided to have a size larger than that of positive electrode 11 in order to suppress deposition of lithium, and is provided to be longer than positive electrode 11 in a longitudinal direction and a width direction (lateral direction). Further, two separators 13 are provided to have a size slightly larger than at least positive electrode 11, and are disposed so as to vertically wrap positive electrode 11, for example.

Positive electrode 11 includes a positive electrode current collector and positive electrode mixture layers respectively disposed on both surfaces of the positive electrode current collector. As the positive electrode current collector, a foil of a metal which is stable in a potential range of positive electrode 11, such as aluminum or an aluminum alloy, a film in which this metal is disposed on a surface layer, or the like can be used. The positive electrode mixture layer contains a positive electrode active material, a conductive agent, and a binder. Positive electrode 11 can be produced, for example, by applying a positive electrode mixture slurry containing a positive electrode active material, a conductive agent, a binder, and the like onto a positive electrode current collector, drying the coated film, and then compressing the coated film to provide a positive electrode mixture layer on either surface of the current collector.

The positive electrode active material is mainly composed of a lithium-containing metal complex oxide. Examples of the metal element contained in the lithium-containing metal complex oxide include Ni, Co, Mn, Al, B, Mg, Ti, V, Cr, Fe, Cu, Zn, Ga, Sr, Zr, Nb, In, Sn, Ta, and W. A preferred example of the lithium-containing metal complex oxide is a complex oxide containing at least one of Ni, Co, Mn, and Al.

Examples of the conductive agent contained in the positive electrode mixture layer include carbon materials such as carbon black, acetylene black, Ketjen black, and graphite. Examples of the binder contained in the positive electrode mixture layer include fluorine resins such as polytetrafluoroethylene (PTFE) and polyvinylidene fluoride (PVdF), polyacrylonitrile (PAN), polyimide, an acrylic resin, and polyolefin. These resins may be used in combination with a cellulose derivative such as carboxymethyl cellulose (CMC) or a salt thereof, polyethylene oxide (PEO), and the like.

Negative electrode 12 includes a negative electrode current collector and negative electrode mixture layers respectively disposed on both surfaces of the negative electrode current collector. As the negative electrode current collector, a foil of a metal which is stable in a potential range of negative electrode 12, such as copper or a copper alloy, a film in which this metal is disposed on a surface layer, or the like can be used. The negative electrode mixture layer contains a negative electrode active material and a binder. Negative electrode 12 can be produced, for example, by applying a negative electrode mixture slurry containing a negative electrode active material, a binder, and the like onto a negative electrode current collector, drying the coated film, and then compressing the coated film to provide a negative electrode mixture layer on either surface of the current collector.

As the negative electrode active material, in general, a carbon material that reversibly occludes and releases lithium ions is used. Preferable examples of the carbon material include natural graphite such as flake graphite, bulky graphite, and earthy graphite, and artificial graphite such as bulky artificial graphite and graphitized mesophase carbon microbeads. The negative electrode mixture layer may contain a Si-containing compound as a negative electrode active material. As the negative electrode active material, a metal to be alloyed with lithium other than Si, an alloy containing this metal, a compound containing this metal, or the like may be used.

As the binder contained in the negative electrode mixture layer, a fluorine resin, PAN, a polyimide resin, an acrylic resin, a polyolefin resin, or the like may be used as in the case of positive electrode 11, but preferably, a styrene-butadiene rubber (SBR) or a modified product thereof is used. The negative electrode mixture layer may contain, in addition to SBR or the like, for example, CMC or a salt thereof, polyacrylic acid (PAA) or a salt thereof, polyvinyl alcohol or the like.

For separator 13, a porous sheet with ion permeability and insulation properties is used. Specific examples of the porous sheet include a microporous thin film, a woven fabric, and a nonwoven fabric. The material of separator 13 is preferably an olefin resin such as polyethylene or polypropylene, cellulose, or the like. Separator 13 may have either a single layer structure or a multilayer structure. A heat resistant layer or the like may be disposed on the surface of separator 13. Although negative electrode 12 may constitute a winding start end of electrode body 14, separator 13 generally extends beyond a winding start side end of negative electrode 12, and a winding start side end of separator 13 becomes the winding start end of electrode body 14.

In the example shown in Fig. 1, positive electrode lead 21 is electrically connected to an intermediate part of a positive electrode core in a winding direction, and negative electrode lead 22 is electrically connected to a winding finish end of a negative electrode core in the winding direction. However, negative electrode lead 22 may be electrically connected to the winding start end in the winding direction of the negative electrode core. Alternatively, electrode body 14 may have two negative electrode leads, one of which may be electrically connected to the winding start end in the winding direction of the negative electrode core, and the other of which may be electrically connected to the winding finish end in the winding direction of the negative electrode core. Alternatively, negative electrode 12 and outer covering can 15 may be electrically connected by bringing a winding finish side end of the negative electrode core in the winding direction into contact with the inner surface of the outer covering can.

Hereinafter, in the present disclosure, a side of sealing member 16 in an axial direction of battery 10 will be described as an upper side, and a side of bottom 27 will be described as a lower side.

As shown in Fig. 1, battery 10 further includes insulating plate 19 disposed on the upper side of electrode body 14 and insulating plate 20 disposed on the lower side of electrode body 14. In the example shown in Fig. 1, positive electrode lead 21 attached to positive electrode 11 extends to the side of sealing member 16 through a through hole of insulating plate 19, and negative electrode lead 22 attached to negative electrode 12 extends to the side of bottom 27 of outer covering can 15 through the outside of insulating plate 20. Positive electrode lead 21 is connected to a lower surface of a central part in a radial direction of sealing member 16 by welding or the like, and a top surface of sealing member 16 electrically connected to positive electrode lead 21 serves as a positive electrode external terminal. Further, negative electrode lead 22 is connected to an inner surface of bottom 27 of outer covering can 15 by welding or the like, and outer covering can 15 serves as a negative electrode external terminal.

Outer covering can 15 is a metal container having bottomed cylindrical side wall 26 and bottom 27. Outer covering can 15 and sealing member 16 are sealed with annular gasket 23, and an internal space of the battery is sealed by the sealing. Gasket 23 is sandwiched between outer covering can 15 and sealing member 16, and insulates sealing member 16 from outer covering can 15. Gasket 23 serves as a sealing material for maintaining airtightness inside the battery, and prevents leakage of the electrolytic solution. Gasket 23 also serves as an insulating material for preventing a short circuit between outer covering can 15 and sealing member 16.

Groove 24 which is recessed inward in the radial direction by spinning a part of a cylindrical outer peripheral surface is provided in an upper part of outer covering can 15, and annular swaged part 25 is provided at an opening end of outer covering can 15. An inner peripheral surface of groove 24 protrudes in the radial direction. Side wall 26 accommodates electrode body 14 and the non-aqueous electrolyte, and swaged part 25 is bent inward in the radial direction from an end of side wall 26 on a side of the opening to extend inward in the radial direction. Sealing member 16 is sandwiched together with gasket 23 between swaged part 25 and an upper side of groove 24, and is fixed to outer covering can 15.

Sealing member 16 includes disk-shaped sealing plate 17 and reinforcing plate 18 disposed on an outer periphery of sealing plate 17.

As described later, sealing member 16 provides a CID function. In sealing plate 17 of sealing member 16, when an internal pressure of the battery increases due to heat generation at the time of overcharge or abnormality, valve body 17a is deformed upward, and the connection with positive electrode lead 21 is cut off, and in turn the current path from positive electrode 11 to sealing member 16 is cut off. Sealing plate 17 may be provided with an explosion-proof valve that breaks to exhaust an internal gas when the internal pressure further increases. Sealing member 16 will be described later in detail.

In battery 10, the positive electrode external terminal as a first terminal is disposed on the top surface of sealing member 16, and the negative electrode external terminal as a second terminal is disposed toward swaged part 25 of outer covering can 15. Electrode body 14 may be connected to allow outer covering can 15 to function as a positive electrode external terminal and sealing member 16 to function as a negative electrode external terminal. When outer covering can 15 also serves as a terminal, current collection may be performed from bottom 27 of outer covering can 15.

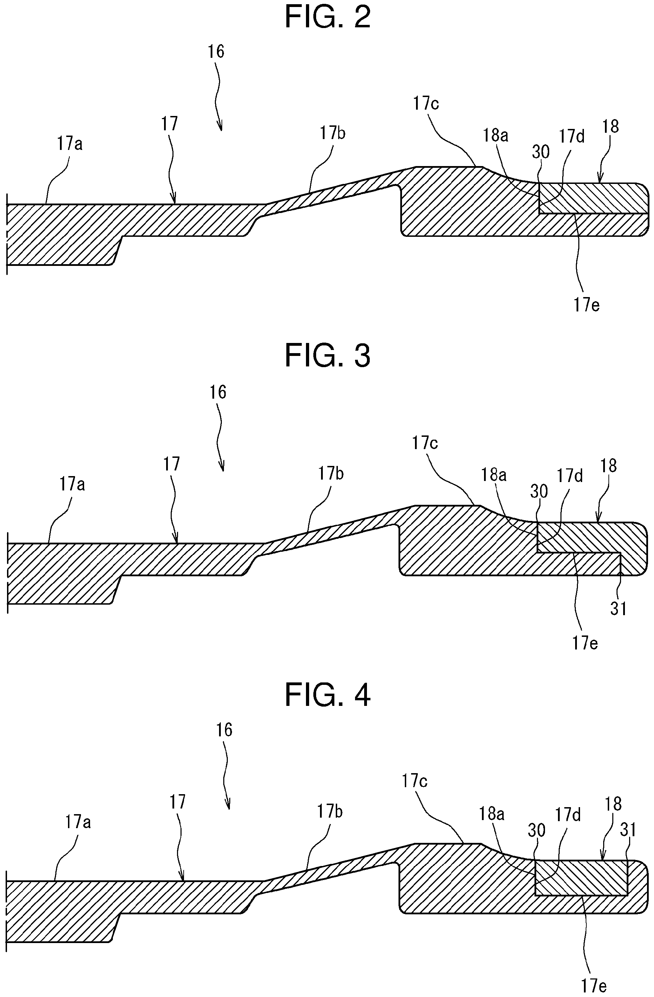

Next, details of sealing member 16 in a first exemplary embodiment will be described with reference to Figs. 1 and 2. Fig. 2 is an enlarged sectional view of a part of sealing member 16 used in battery 10 of the first exemplary embodiment.

Sealing member 16 includes disk-shaped sealing plate 17 and annular reinforcing plate 18 disposed on an outer peripheral side of sealing plate 17. Sealing plate 17 and reinforcing plate 18 are both made of a metal material. Reinforcing plate 18 is made of a material having higher rigidity than that of sealing plate 17.

Sealing plate 17 has a disk shape in plan view, and is configured by a plate-like metal member. Sealing plate 17 is made of aluminum, for example. Sealing plate 17 includes disk-shaped valve body 17a at a central part in the radial direction, arm 17b extending outward in the radial direction on the outer peripheral side of valve body 17a, and outer periphery 17c on the outer peripheral side of arm 17b.

Valve body 17a has a convex joint below the central part in the radial direction. Valve body 17a is welded to positive electrode lead 21 at the joint, and is electrically connected to positive electrode 11. Valve body 17a constitutes a CID function in which the connection with positive electrode lead 21 is interrupted by reversing upward when the gas pressure inside the battery increases.

Arm 17b is provided to be thinner than valve body 17a and outer periphery 17c. When the gas pressure inside the battery further increases after the CID mechanism operates, arm 17b breaks and acts as an explosion-proof valve that releases the gas outside.

Outer periphery 17c is a part which is located on the outer periphery of sealing plate 17 and is swaged by swaged part 25 of outer covering can 15. Outer periphery 17c has first region 17d in which the plate thickness decreases in a circumferential direction. Further, second region 17e having a plate thickness smaller than that of first region 17d is provided on the outer peripheral side of first region 17d of outer periphery 17c.

Reinforcing plate 18 is made of an annular metal material, and has inner edge 18a on the inner peripheral side in the radial direction. Reinforcing plate 18 is formed into a shape corresponding to a shape of second region 17e of sealing plate 17. In the present exemplary embodiment, reinforcing plate 18 is placed on second region 17e, and is provided such that inner edge 18a is aligned with first region 17d. The outer peripheral end of reinforcing plate 18 in the radial direction is provided so as to coincide with the outer peripheral end of second region 17e. Sealing member 16 is configured together with sealing plate 17 in a state where reinforcing plate 18 is placed on second region 17e. Reinforcing plate 18 is not necessarily annular. Reinforcing plate 18 may have an arcuate shape or the like.

Reinforcing plate 18 is made of a metal member having higher rigidity than that of sealing plate 17. Reinforcing plate 18 is made of iron, nickel, copper, stainless used steel (SUS), or the like, for example. However, the material is not limited to the above examples, and any metal material having high rigidity may be used.

Sealing member 16 of the present exemplary embodiment seals a battery case by being swaged in a state where gasket 23 is attached to sealing plate 17 on which reinforcing plate 18 is placed in second region 17e. Sealing member 16 can suppress deformation of sealing member 16 due to swaging by providing reinforcing plate 18 having higher rigidity than that of sealing plate 17 at least below swaged part 25.

Reinforcing plate 18 of the present exemplary embodiment is disposed below swaged part 25 and on second region 17e where the thickness of the outer periphery of sealing plate 17 is thin. As a result, the plate thickness of sealing member 16 at swaged part 25 is not increased, and the battery capacity can be increased. Therefore, in battery 10 of the present exemplary embodiment, sealing member 16 can be thinned, and deformation of sealing member 16 due to swaging can be suppressed.

Next, sealing plate 17 and reinforcing plate 18 will be further described with reference to Fig. 2. As shown in Fig. 2, in sealing plate 17, first region 17d and inner edge 18a disposed on the inner peripheral side in the radial direction of reinforcing plate 18 are butted to provide butt part 30. By bringing first region 17d and inner edge 18a into contact with each other, positioning when reinforcing plate 18 is placed becomes easy.

Second region 17e of sealing plate 17 on which reinforcing plate 18 is placed receives strong stress during swaging or connection to an external circuit. Therefore, sealing plate 17 and reinforcing plate 18 are required to have joint strength that is hardly deformed by these stresses. Sealing plate 17 and reinforcing plate 18 are joined to each other by butt welding at butt part 30. By performing butt welding, the joints are combined, and the joint strength is increased. In other words, a welding mark is provided along a boundary between first region 17d and inner edge 18a and extending in a thickness direction of sealing plate 17. Accordingly, even when stress (particularly stress such as bending) is applied, deformation from the joint extending in the thickness direction of sealing plate 17 is suppressed. Here, lap welding may be performed in the radial direction on the surface on which reinforcing plate 18 is placed on second region 17e. In other words, it is possible to provide a welding mark whose depth direction corresponds to a laminating direction of second region 17e and reinforcing plate 18. As a result, it is possible to further increase rigidity against stress due to swaging of sealing member 16. A method for joining the boundary between first region 17d and reinforcing plate 18 is not limited to welding. The bonding may be performed by pressure welding or a conductive adhesive.

Inner edge 18a of reinforcing plate 18 is configured to be positioned on the inner peripheral side with respect to the tip positioned on the inner peripheral side in the radial direction of swaged part 25. With such a configuration, reinforcing plate 18 receives the stress caused by the swaging, so that the deformation caused by the swaging can be effectively suppressed. When the outer edge of reinforcing plate 18 in the radial direction is located outside the tip of the swaged part, deformation due to swaging can be further suppressed.

When battery 10 is a non-aqueous electrolyte secondary battery, outer covering can 15 under sealing plate 17 is filled with an electrolytic solution. Sealing plate 17 is preferably made of a metal material having corrosion resistance to the electrolytic solution, because sealing plate 17 may come into contact with the electrolytic solution. For example, it is preferable to use aluminum. On the other hand, reinforcing plate 18 is placed on second region 17e of sealing plate 17, and is less likely to come into contact with the electrolyte solution. Therefore, it is preferable to select a material with a priority given to rigidity over corrosion resistance. As described above, the preferably material is iron, nickel, copper, SUS, or the like.

In battery 10, positive electrode 11 of electrode body 14 is electrically connected to the joint at a lower surface of the central part of sealing member 16 in the radial direction through positive electrode lead 21, and a current flows from the top surface of sealing member 16 to the positive electrode external terminal (not shown). Therefore, a resistance value of this current path is preferably low. The sealing member described in PTL 2 is formed by overlapping two kinds of metals. Therefore, when a bonding state between the metals below and above the joint to which the positive electrode lead is joined is poor, the resistance value increases. Furthermore, since one of these metals is configured by a metal material having high rigidity, the resistance value from positive electrode 11 to the positive electrode external terminal tends to increase, which is not preferable.

In contrast to PTL 2, in sealing member 16 of battery 10 of the present exemplary embodiment, reinforcing plate 18 for increasing rigidity is disposed below swaged part 25 at the outer periphery. Therefore, reinforcing plate 18 is positioned away from the current path from positive electrode 11 to sealing member 16 and from the top surface of sealing member 16 to the positive electrode external terminal. Thus, the resistance value of the current path is not greatly affected. Therefore, the rigidity of sealing member 16 can be increased without significantly affecting the battery performance.

The configuration of sealing member 16 is not limited to the configuration of Fig. 2. Hereinafter, other exemplary embodiments will be described.

### <Second exemplary embodiment>

Fig. 3 is a partially enlarged sectional view of sealing member 16 of a second exemplary embodiment. The configuration of battery 10 is the same as that in Fig. 1. Members having the same functions as those of the first exemplary embodiment in Fig. 2 are denoted by the same reference numerals.

Sealing member 16 of the present exemplary embodiment is provided so as to extend below an outer peripheral edge of reinforcing plate 18 and abut an outer peripheral edge of second region 17e. Accordingly, butt part 31 between reinforcing plate 18 and second region 17e is provided on a lower surface of sealing member 16. Butt part 30 provided by first region 17d and inner edge 18a is the same as that in the first exemplary embodiment in Fig. 2. Similarly to the first exemplary embodiment, butt parts 30 and 31 effectively act on positioning. Sealing member 16 of the present exemplary embodiment is joined by butt welding on both upper and lower surfaces of sealing member 16 by butt parts 30 and 31. As butt welding is performed to two parts of outer periphery 17c of sealing member 16 in the radial direction, the joint strength between sealing plate 17 and reinforcing plate 18 can be higher than that in the first exemplary embodiment. The second exemplary embodiment is the same as in the first exemplary embodiment in that sealing member 16 is thinned and the deformation strength against swaging is increased.

### <Third exemplary embodiment>

Fig. 4 is a partially enlarged sectional view of sealing member 16 of a third exemplary embodiment. The configuration of battery 10 is the same as that in Fig. 1.

In sealing member 16 of the present exemplary embodiment, second region 17e having a small thickness of sealing plate 17 does not reach the outer edge in the radial direction, and defines groove-shaped second region 17e in the circumferential direction. In the present exemplary embodiment, in addition to butt part 30, butt part 31 is provided on the outer peripheral side of second region 17e in the radial direction. A length of reinforcing plate 18 in the radial direction is adjusted according to the shape of second region 17e, and the reinforcing plate is provided to have a size that just fits groove-shaped second region 17e. In the present exemplary embodiment, two butt parts 30 and 31 are disposed respectively on the inner peripheral side and the outer peripheral side in the radial direction of second region 17e. Butt parts 30 and 31 are similarly effective in positioning. In the present exemplary embodiment, it is also possible to increase the joining strength between sealing plate 17 and reinforcing plate 18 by butt welding butt parts 30 and 31. The third exemplary embodiment is the same as in the other exemplary embodiments in that sealing member 16 is thinned and the deformation strength against swaging is increased.

### <Fourth exemplary embodiment>

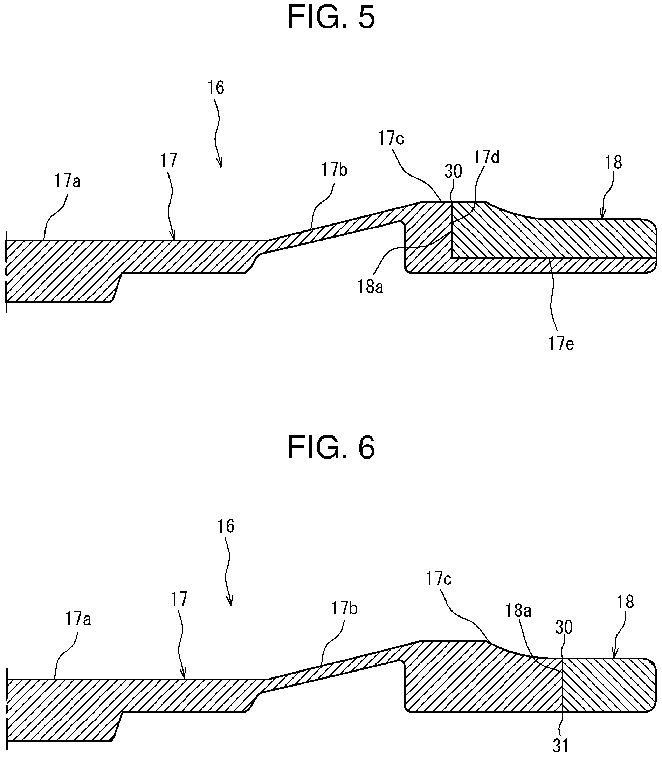

Fig. 5 is a partially enlarged sectional view of sealing member 16 of a fourth exemplary embodiment. The configuration of battery 10 is the same as that in Fig. 1.

Sealing member 16 of the present exemplary embodiment is different from the first exemplary embodiment in that first region 17d of sealing plate 17 is provided at a position on the inner peripheral side in the radial direction. With such a configuration, it is possible to flexibly cope with a change in dimensions of swaged part 25 of sealing member 16. That is, even in a battery in which the tip on the inner peripheral side of swaged part 25 in the radial direction greatly extends to the inner peripheral side, reinforcing plate 18 can be reliably positioned below swaged part 25. Similarly to the other exemplary embodiments, butt part 30 is firmly joined by performing joining by butt welding. The fourth exemplary embodiment is also the same as in the other exemplary embodiments in that sealing member 16 is thinned and the deformation strength against swaging is increased.

### <Fifth exemplary embodiment>

Fig. 6 is a partially enlarged sectional view of sealing member 16 of a fifth exemplary embodiment. Sealing member 16 of the first to fourth exemplary embodiments has a configuration in which reinforcing plate 18 is placed on second region 17e provided on outer periphery 17c of sealing plate 17. In the present exemplary embodiment, sealing plate 17 of sealing member 16 is not provided with second region 17e, and the part where second region 17e is provided in the first exemplary embodiment is entirely replaced with reinforcing plate 18, for example. Accordingly, reinforcing plate 18 is fitted into the outer peripheral side of sealing plate 17. Sealing plate 17 has butt parts 30 and 31 respectively at two positions of an upper surface and a lower surface. Also in the present exemplary embodiment, the joint strength can be increased by butt welding of two butt parts 30 and 31. In the present exemplary embodiment, only reinforcing plate 18 is provided below swaged part 25, and strength against swaging stress can be increased.

Note that the present invention is not limited to the above-described exemplary embodiments and modified examples thereof, and it is a matter of course that various changes and improvements can be made within the scope of the matters described in the claims of the present application.

### REFERENCE MARKS IN THE DRAWINGS

- 10: battery (power storage device)
- 11: positive electrode
- 12: negative electrode
- 13: separator
- 14: electrode body
- 15: outer covering can
- 16: sealing member
- 17: sealing plate
- 17a: valve body
- 17b: arm
- 17c: outer periphery
- 17d: first region
- 17e: second region
- 18: reinforcing plate
- 18a: inner edge
- 19, 20: insulating plate
- 21: positive electrode lead
- 22: negative electrode lead
- 23: gasket
- 24: groove
- 25: swaged part
- 26: side wall
- 27: bottom
- 30, 31: butt part

## Claims

1. A power storage device comprising:
an outer covering can in a bottomed cylindrical shape, the outer covering can accommodating an electrode body; and
a sealing member that closes an opening of the outer covering can,
wherein
the sealing member includes
a sealing plate and
a reinforcing plate that is disposed on an outer peripheral side of the sealing plate, the reinforcing plate being joined with the sealing plate at a boundary being along a thickness of the sealing plate, and
the reinforcing plate includes a member including a rigidity higher than rigidity of the sealing plate.

2. The power storage device according to Claim 1, wherein
the sealing plate includes a first region on an outer periphery, and a second region thinner than the first region and disposed on an outer periphery of the first region, and
the reinforcing plate is disposed on the second region, and includes an inner edge joined to the first region, the inner edge being positioned on an inner side in a radial direction of the reinforcing plate.

3. The power storage device according to Claim 2, wherein
the outer covering can includes an opening provided with a swaged part, and
the inner edge of the reinforcing plate is positioned on an inner side in the radial direction with respect to a tip of the swaged part, which is on an inner side in the radial direction.

4. The power storage device according to one of Claims 2 to 3, wherein the sealing plate is configured by a member including a corrosion resistance.

5. The power storage device according to one of Claims 2 to 4, wherein the reinforcing plate is joined with the first region at a welding mark extending in a laminating direction.
